# FASCICULE DE BREVET EUROPEEN

(11) **EP 2 984 772 B1**
(45) Date de publication et mention de la délivrance du brevet: **21.03.2018**
(21) Numéro de dépôt: 14726682.9
(22) Date de dépôt: 11.04.2014
(51) Int. Cl.: H04B 10/071, H04B 10/077

(54) **SYSTÈME DE SUPERVISION D'UNE LIGNE MONO-FIBRE PAR POLARISATION D'UN SIGNAL DE SONDE**
SYSTEM ZUR ÜBERWACHUNG EINES EINFASERSTRANGS DURCH POLARISATION EINES SONDENSIGNALS
SYSTEM FOR SUPERVISING A MONOFIBRE LINE BY POLARISING A PROBE SIGNAL

(30) Priorité: 12.04.2013 FR 1353358
(43) Date de publication de la demande: 17.02.2016
(73) Titulaire: Orange, 75015 Paris (FR)
(72) Inventeur: LE GUYADER, Bertrand, F-22450 Pommerit Jaudy (FR); GUILLO, Laurent, F-22300 Rospez (FR); CHARBONNIER, Benoît, F-22300 Lannion (FR); CHANCLOU, Philippe, F-22300 Lannion (FR)
(74) Mandataire: Mathan, Luc Stefan
(86) Numéro de dépôt international: PCT/FR2014/050886
(87) Numéro de publication internationale: WO 2014/167260

(56) Documents cités:
- US-B1- 6 396 575
- URBAN P J ET AL: "Fiber plant manager: an OTDR- and OTM-based PON monitoring system", IEEE COMMUNICATIONS MAGAZINE, IEEE SERVICE CENTER, PISCATAWAY, US, vol. 51, no. 2, 1 février 2013 (2013-02-01), pages S9-S15, XP011505034, ISSN: 0163-6804, DOI: 10.1109/MCOM.2013.6461183
- HUTTNER B ET AL: "Distributed PMD Measurement with a Polarization-OTDR in Optical Fibers", JOURNAL OF LIGHTWAVE TECHNOLOGY, IEEE SERVICE CENTER, NEW YORK, NY, US, vol. 17, no. 10, 1 octobre 1999 (1999-10-01), XP011029525, ISSN: 0733-8724
- BRINKMEYER E ET AL: "Reduction of polarization sensitivity of optical-time domain reflectometers for single-mode fibers", JOURNAL OF LIGHTWAVE TECHNOLOGY, IEEE SERVICE CENTER, NEW YORK, NY, US, vol. 4, no. 5, 1 mai 1986 (1986-05-01), pages 513-515, XP011401923, ISSN: 0733-8724, DOI: 10.1109/JLT.1986.1074743
- ANDREA GALTAROSSA ET AL: "Single-End Polarization Mode Dispersion Measurement Using Backreflected Spectra Through a Linear Polarizer", JOURNAL OF LIGHTWAVE TECHNOLOGY, IEEE SERVICE CENTER, NEW YORK, NY, US, vol. 17, no. 10, 1 octobre 1999 (1999-10-01), XP011029523, ISSN: 0733-8724

## Description

### 1. Domaine de l'invention

La demande d'invention se situe dans le domaine de la supervision de lignes optiques point à point, mono-fibres.

### 2. Etat de la technique antérieure

Pour une liaison optique entre un site central et un site distant, il existe des solutions de supervision de lignes mono-fibre basées sur l'utilisation d'une longueur d'onde dite sonde, émise par un équipement localisé au site central, puis renvoyée par un équipement localisé au site distant. La liaison optique est constituée d'une seule fibre, à la fois pour le sens descendant, du site central vers le site distant, et pour le sens montant, du site distant vers le site central.

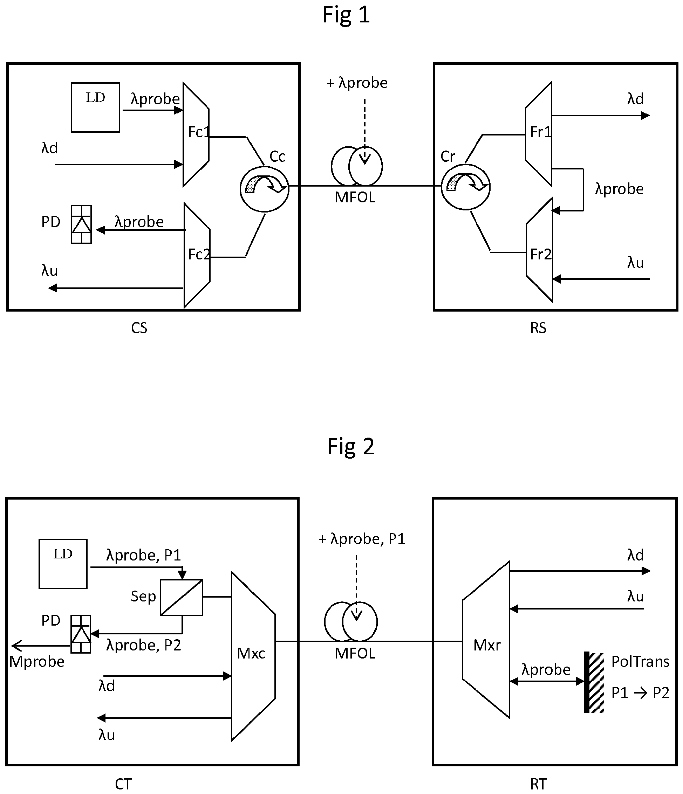

La figure 1 présente une liaison optique mono-fibre MFOL entre un site central CS et un site distant RS, selon la technique antérieure. Au plus proche du site distant, ou dans le site distant, un filtre optique Fr1 sépare la longueur d'onde sonde λprobe et la longueur d'onde λd du signal utile descendant issus de la fibre. Puis un filtre optique Fr2 combine λprobe à la longueur d'onde λu du signal utile montant, et les deux longueurs d'onde λprobe et Au sont réinjectées dans la fibre. Le terminal localisé au site central sait avec quelle puissance optique il a émis le signal de sonde dans la fibre MFOL dans le sens descendant, à l'aide d'un point de mesure (non illustré) localisé au niveau de la diode laser LD par exemple. Il mesure la puissance optique de la longueur d'onde sonde λprobe provenant de la fibre MFOL dans le sens montant, à l'aide par exemple de la photodiode PD. Sur la base de la différence entre ces deux niveaux de puissance, il peut en déduire des informations sur le fonctionnement de la ligne MFOL. Par exemple, il lui est ainsi possible de détecter une détérioration ou une coupure de la fibre, du moins en théorie.

Un problème de cette solution est dû à la rétrodiffusion naturelle d'un signal lumineux dans la fibre optique. La propagation de la lumière dans la fibre donne naissance à certains phénomènes tels que la diffusion Rayleigh et la diffusion Brillouin. Le premier phénomène (Rayleigh) est lié à la valeur de la longueur d'onde par rapport à la taille des particules constitutives de la fibre, engendrant ainsi une diffusion même à des niveaux bas de puissance de signal injecté. Le second phénomène (Brillouin) est un effet non-linéaire apparaissant dans la fibre lorsque le niveau de puissance du signal injecté y est trop élevé. La conséquence de ces effets est que l'équipement localisé au site central, lorsqu'il mesure la puissance optique de la sonde provenant de la fibre dans le sens montant, ne pourra pas distinguer la partie du signal correspondant au signal de sonde montant réellement réémis par le site distant, de la partie du signal correspondant aux phénomènes de rétrodiffusion, illustré par "+λprobe" dans la figure 1, puisque ces deux parties sont de même longueur d'onde. Même si la fibre a subi une détérioration, voire une coupure complète, il subsistera cette dernière partie, qui sera reçue et mesurée au site central. Une telle solution de supervision n'est donc pas très fiable.

Le brevet US 6,396,575 B1, le document "Fiber plant manager: an ODTR- and ODM-based PON monitoring system", IEEE Communication Magazine, vol.51, no.2, février 2013, ainsi que le document "Distributed PMD measurement with a polarization-ODTR in optical fibers", Journal of Lightwave Technology, vol.17, n.10, octobre 1999, décrivent des systèmes de supervision de lignes optiques.

Un des buts de l'invention est de remédier aux inconvénients de l'état de la technique.

### 3. Exposé de l'invention

L'invention vient améliorer la situation à l'aide d'un procédé de réémission d'un signal de sonde, mis en oeuvre par un terminal distant connecté à un terminal central par une ligne optique mono-fibre, le signal de sonde étant reçu par le terminal distant et de longueur d'onde prédéterminée, les terminaux central et distant s'échangeant sur ladite ligne optique des signaux de données utiles de longueurs d'onde différentes de celle du signal de sonde, comprenant les étapes suivantes :
- réception du signal de sonde,
- réémission du signal de sonde sur la ligne mono-fibre vers le terminal central, et, le signal de sonde reçu étant polarisé selon une première polarisation, ledit procédé comprenant, préalablement à l'étape de réémission, une étape de : • modification de la première polarisation du signal de sonde en une deuxième polarisation.

Avec l'invention, l'influence de la lumière de la sonde qui est rétrodiffusée vers le terminal central par diffusion Rayleigh est limitée du fait de la modification de sa polarisation par le terminal distant. En effet, la lumière de longueur d'onde sonde qui est rétrodiffusée avant son arrivée au terminal distant possède une polarisation de même nature que celle de la lumière de longueur d'onde sonde elle-même avant d'être modifiée, alors que la lumière de longueur d'onde sonde réémise par le terminal distant bénéficie d'une polarisation différente.

Ainsi, la longueur d'onde sonde circulant dans le sens montant, c'est-à-dire vers le terminal central, possède deux types de polarisation: un premier type correspondant à la lumière rétrodiffusée par effet Rayleigh générée par le signal de sonde reçu par le terminal distant, et un deuxième type correspondant au signal de sonde réellement réémis par le terminal distant.

Il est ainsi possible pour un terminal central recevant ces deux types de polarisation de les distinguer, et de ne prendre en compte que le deuxième type pour superviser la ligne. Si la ligne est coupée, il y aura absence du deuxième type, et inversement.

Selon un aspect de l'invention, le procédé de réémission comprend une étape de réflexion du signal de sonde.

Grâce à l'étape de réflexion, aucun composant actif de génération de lumière n'est nécessaire dans le terminal distant pour la longueur d'onde sonde. L'augmentation de consommation énergétique induite par la réémission du signal de sonde par le terminal distant est donc nulle.

Selon un aspect de l'invention, les étapes de modification et de réémission sont mises en oeuvre dans un miroir rotateur de Faraday.

Un seul composant passif, le miroir rotateur de Faraday, habituellement utilisé dans la fabrication de cavités lasers, est suffisant pour mettre en oeuvre les modules de modification et de réémission du terminal distant selon l'invention. Cette utilisation innovante de ce composant tend à diminuer les coûts de développement, de production et de fonctionnement du terminal central selon l'invention.

Selon un aspect de l'invention, la deuxième polarisation est tournée de 90 degrés par rapport à la première polarisation.

En modifiant la polarisation autour de 90 degrés, avec une imprécision de l'ordre de deux degrés due aux procédés de fabrication des composants, on obtient un niveau optimal de différentiation entre longueur d'onde sonde rétrodiffusée par effet Rayleigh et longueur d'onde sonde réfléchie par le terminal distant. La détection de la longueur d'onde sonde réfléchie est ainsi facilitée pour le terminal central.

L'invention concerne aussi un procédé de traitement d'un signal de sonde, mis en oeuvre par un terminal central connecté à un terminal distant par une ligne optique mono-fibre, le signal de sonde étant de longueur d'onde prédéterminée, dite longueur d'onde sonde, les terminaux central et distant s'échangeant sur ladite ligne optique des signaux de données utiles de longueurs d'onde différentes de celle du signal de sonde, le procédé comprenant les étapes suivantes :
- émission du signal de sonde sur la ligne optique mono-fibre vers le terminal distant,
- réception d'un signal de longueur d'onde sonde,
- mesure de puissance effectuée sur la base du signal de longueur d'onde sonde reçu, en vue d'une supervision de la ligne optique mono-fibre,
et, le signal de sonde émis étant polarisé selon une première polarisation, ledit procédé comprenant en outre une étape de :
- séparation du signal de longueur d'onde sonde reçu en une première partie selon la première polarisation et une deuxième partie selon une deuxième polarisation, la mesure de puissance étant effectuée sur la deuxième partie.

Avec l'invention et contrairement à la technique antérieure, une partie du signal de sonde reçue par le terminal central mettant en oeuvre le procédé de traitement selon l'invention, n'est pas polarisée selon la même polarisation que le signal de sonde que ce terminal a émis à l'origine. Il en résulte qu'elle n'est pas polarisée non plus comme une autre partie du signal de même longueur d'onde sonde, également reçue par le terminal central, générée sur la ligne optique mono-fibre par effet de rétrodiffusion Rayleigh à partir du signal de sonde émis à l'origine.

Le terminal central peut ainsi séparer le signal reçu de longueur d'onde sonde en fonction de la première et de la deuxième polarisation, et isoler la partie qui correspond réellement au signal de sonde.

La pollution que l'effet Rayleigh créée sur la longueur d'onde sonde est ainsi limitée, voire éliminée. Une supervision de la ligne optique peut donc se baser sur une mesure d'une partie du signal de longueur d'onde sonde qui n'est pas impactée par l'effet de rétrodiffusion Rayleigh. Un dysfonctionnement ou une coupure sur la ligne optique peut ainsi être détecté de manière fiable.

Selon un aspect de l'invention, l'étape de séparation est mise en oeuvre dans un composant de séparation de polarisation.

Un tel composant de séparation de polarisation est par exemple le CCSP (Cube Combineur Séparateur de Polarisation), un composant passif utilisé habituellement dans le coeur des réseaux de transport. Cette utilisation innovante de ce composant tend à diminuer les coûts de développement, de production et de fonctionnement du terminal central selon l'invention.

L'invention concerne aussi un dispositif de réémission d'un signal de sonde, mis en oeuvre par un terminal distant connecté à un terminal central par une ligne optique mono-fibre, le dispositif étant apte à recevoir par ladite ligne au moins une première longueur d'onde dite client et à émettre vers le terminal central au moins une deuxième longueur d'onde client, les longueurs d'onde client portant des données utiles, le dispositif comprenant :
- un module de réception d'un signal, dit de sonde, de longueur d'onde prédéterminée différente des première et deuxième longueurs d'onde client,
- un module de réémission du signal de sonde sur la ligne mono-fibre vers le terminal central,
et, le signal de sonde reçu étant polarisé selon une première polarisation, ledit dispositif comprenant en outre un module de modification de la première polarisation du signal de sonde en une deuxième polarisation, apte à être mis en oeuvre préalablement à la réémission du signal de sonde.

L'invention concerne aussi un dispositif de traitement d'un signal de sonde, mis en oeuvre par un terminal central connecté à un terminal distant par une ligne optique mono-fibre, le dispositif étant apte à émettre au moins une première longueur d'onde dite client et à recevoir au moins une deuxième longueur d'onde client, les longueurs d'onde client portant des données utiles, le dispositif comprenant :
- un module d'émission vers le terminal distant d'un signal, dit signal de sonde, de longueur d'onde prédéterminée différente des première et deuxième longueurs d'onde client, dite longueur d'onde sonde,
- un module de réception d'un signal de longueur d'onde sonde,
- un module de mesure de puissance effectuée sur la base du signal de longueur d'onde sonde reçu, en vue d'une supervision de la ligne optique mono-fibre,
et, le signal de sonde émis étant polarisé selon une première polarisation, ledit dispositif comprenant en outre un module de séparation du signal de longueur d'onde sonde reçu en une première partie selon la première polarisation et une deuxième partie selon une deuxième polarisation, la mesure de puissance étant effectuée sur la deuxième partie.

L'invention concerne aussi un terminal distant, comprenant un dispositif de réémission tel que décrit précédemment.

L'invention concerne aussi un terminal central, comprenant au moins un dispositif de traitement d'un signal de sonde tel que décrit précédemment.

L'invention concerne aussi un système de supervision de ligne optique mono-fibre, comprenant un terminal central tel que décrit précédemment, au moins un terminal distant tel que décrit précédemment, et au moins une ligne optique mono-fibre apte à connecter l'au moins un terminal distant au terminal central.

Par exemple, le système de supervision trouve une application dans les réseaux de collecte mobile selon la norme 3GPP LTE/EPC, où une station de base sur un site central est connectée par une fibre optique en point à point à chacun des sites distants d'antennes. Pour chacune des fibres entre site central et site distant, le terminal central selon l'invention peut être mis en oeuvre dans un équipement BBU (Base Band Unit, ou unité de bande de base, en français) sur le site de la station de base, et le terminal distant selon l'invention peut être mis en oeuvre dans un équipement RRH (Remote Radio Head, ou tête radio distante, en français) sur le site d'antennes.

Un autre exemple d'application du système de supervision selon l'invention est celui des liaisons optiques haut-débit point à point louées par des entreprises à des opérateurs de réseaux de communication électroniques.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un système de supervision de ligne optique mono-fibre selon la technique antérieure,
- la figure 2 présente un exemple de mise en oeuvre d'un système de supervision de ligne optique mono-fibre selon un mode de réalisation de l'invention,
- la figure 3 présente les étapes des procédés de réémission d'un signal de sonde et de traitement d'un signal de sonde, selon un aspect de l'invention,
- la figure 4 présente le dispositif de traitement d'un signal de sonde selon un mode particulier de réalisation de l'invention, mettant en oeuvre le procédé de traitement selon l'invention,
- la figure 5 présente le dispositif de réémission d'un signal de sonde selon un mode particulier de réalisation de l'invention, mettant en oeuvre le procédé de réémission selon l'invention,
- la figure 6 présente un exemple de mise en oeuvre d'un système de supervision de ligne optique mono-fibre selon un mode alternatif de réalisation de l'invention.

### 5. Description détaillée d'au moins un mode de réalisation de l'invention

Dans la suite de la description, on présente un exemple de mode de réalisation de l'invention se basant sur une ligne optique mono-fibre entre deux équipements de réseau de communication électronique tels qu'un équipement BBU et un équipement RRH, mais l'invention s'applique également à d'autres cas.
La **figure 1** a déjà été présentée en relation avec la description de problèmes de la technique antérieure et ne sera pas décrite plus en détail.
La **figure 2** présente un exemple de mise en oeuvre d'un système de supervision de ligne optique mono-fibre selon un mode de réalisation de l'invention.

Le système comprend un terminal central CT et un terminal distant RT connectés par une ligne optique mono-fibre MFOL. Des signaux utiles descendant et montant de longueurs d'onde respectives λd et λu sont modulés ou démodulés pour être échangés entre les deux terminaux, avec un signal de sonde de longueur d'onde λprobe, au travers de leurs multiplexeurs / démultiplexeurs respectifs Mxc et Mxr.

Dans le terminal CT, une diode laser LD émet le signal de sonde de longueur d'onde λprobe avec une polarisation P1. Ce signal peut être sur-modulé à une fréquence particulière afin de limiter la rétrodiffusion par effet Brillouin. Le module de séparation Sep du terminal CT permet, dans le sens descendant, à un signal de polarisation P1 de passer sans être modifié, et dans l'autre sens, à un signal de polarisation P2 d'être séparé. La photodiode PD mesure la puissance Mprobe du signal séparé, de polarisation P2.

Durant son trajet vers le terminal distant RT, le signal de sonde de polarité P1 est soumis aux effets, notés "+λprobe,P1", de rétrodiffusion Rayleigh et Brillouin dans le milieu optique de la ligne MFOL.

Dans le terminal distant RT, le module PolTrans fait subir au signal de sonde un changement de polarisation, noté "P1→P2", et réémet le signal avec une polarisation P2 vers le terminal CT.

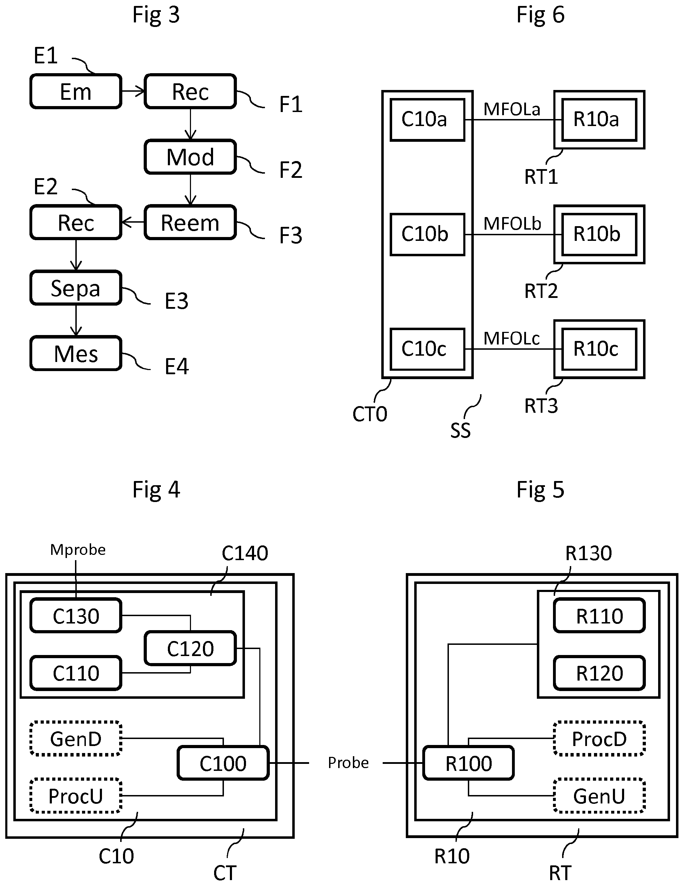

La **figure 3** présente l'ensemble des étapes du procédé de traitement d'un signal de sonde, étapes notées "E" suivi d'un nombre, et les étapes du procédé de réémission d'un signal de sonde, étapes notées "F" suivi d'un nombre.

Lors d'une étape E1 un signal de sonde de longueur d'onde λprobe est émis par une diode laser LD dans le terminal central CT. En sur-modulant cette longueur d'onde à une fréquence autour de 100kHz, on obtient un niveau optimal d'atténuation de l'effet Brillouin. Il est donc possible d'augmenter la puissance du signal de sonde, et d'augmenter ainsi la portée de la ligne optique mono-fibre, sans augmenter la rétrodiffusion naturelle due à la puissance du signal.

Le multiplexeur/démultiplexeur Mxc du terminal central CT multiplexe plusieurs signaux, dont le signal de sonde de longueur d'onde λprobe, et au moins un signal utile descendant, de longueur d'onde λd, avant de les émettre sur la ligne optique MFOL.

Comme tout signal optique, le signal de sonde de longueur d'onde λprobe émis par le terminal central CT vers le terminal distant RT possède une certaine polarisation, notée P1. La lumière rétrodiffusée en conséquence des effets de rétrodiffusion Rayleigh et Brillouin sur ce signal de sonde émis par le terminal CT dans la ligne MFOL possèdera aussi cette même polarisation P1.

Lorsque le signal de sonde est reçu, lors d'une étape F1, par le terminal distant RT, il est démultiplexé avec d'autres signaux de longueurs d'onde différentes, tels que le signal utile descendant de longueur d'onde λd, par le multiplexeur/démultiplexeur Mxr.

Le signal de sonde est ensuite réémis, lors d'une étape F3, par le chemin inverse vers le terminal central CT, grâce au module de réémission PolTrans. Lors d'une étape F2, ce module de réémission PolTrans effectue également une opération de modification de la polarisation du signal de longueur d'onde λprobe. La polarisation initiale P1 et modifiée en une nouvelle valeur P2. Le signal de sonde est donc réémis non pas avec une polarisation P1 mais P2.

La lumière rétrodiffusée en conséquence des effets de rétrodiffusion Rayleigh et Brillouin sur ce signal de sonde émis par le terminal CT dans la ligne MFOL ne possèdera pas cette polarisation P2, modifiée par le terminal distant RT.

Lorsque le signal de sonde est reçu, lors d'une étape E2, par le terminal central CT, il est démultiplexé avec d'autres signaux de longueurs d'onde différentes, tels que le signal utile montant de longueur d'onde Au, par le multiplexeur/démultiplexeur Mxc.

Lors d'une étape E3, le signal de sonde est ensuite traité par un module de séparation de polarisation Sep, qui sépare la partie du signal de sonde de longueur d'onde λprobe en une première partie de polarisation P1 et une deuxième partie de polarisation P2. On sait que la partie P1 est potentiellement polluée par les effets Rayleigh et Brillouin. Ce n'est pas le cas de la partie P2, puisque cette partie n'a pas fait le voyage "aller" du terminal central CT vers le terminal distant RT, mais seulement le voyage "retour", du terminal distant RT vers le terminal central CT.

Lors d'une étape E4, la puissance du signal de sonde de polarisation P2 ainsi séparé et isolé est ensuite mesurée par la photodiode PD.

Contrairement à la technique antérieure, la puissance mesurée ne subit pas les interférences dues à la contribution des effets Rayleigh et Brillouin sur la puissance du signal de sonde reçu durant le voyage "aller" du signal de sonde.

Un autre avantage du système selon l'invention est que le circulateur Cc, de la figure 1, indispensable dans la technique antérieure pour séparer les longueurs d'onde descendantes des longueurs d'onde montantes, n'est plus nécessaire car, pour isoler le signal de sonde à mesurer, il suffit de séparer le séparer entre deux polarisations différentes P1 et P2, et non plus entre sens montant et descendant.

Ainsi, pour un budget optique de 40 dB, la différence entre la puissance du signal de sonde mesurée au terminal central CT dans le cas ou la fibre MFOL est intacte et le cas où elle est coupée peut atteindre une valeur de 9 à 10 dB, au lieu de 3 à 4 selon la technique antérieure. En cas de détérioration de la fibre n'allant pas jusqu'à une coupure, si par exemple une perte de 5dB est observée, il existe encore une marge de détection de 4 à 5dB au-dessus du niveau de l'effet Rayleigh. La supervision de la ligne optique mono-fibre MFOL en est grandement facilitée.

La **figure 4** présente le dispositif de traitement d'un signal de sonde selon un mode particulier de réalisation de l'invention, mettant en oeuvre le procédé de traitement selon l'invention.

Le dispositif C10 de traitement comprend les modules suivants:
- un module C100 de réception, apte à recevoir un signal de sonde Probe; ce module pouvant être avantageusement mis en oeuvre par un multiplexeur / démultiplexeur également apte à démultiplexer en réception plusieurs signaux de longueurs d'onde différentes correspondant par exemple à des signaux utiles, et à multiplexer en émission autant de signaux de ces mêmes longueurs d'onde; le module C100 est également apte à laisser passer le signal de sonde Probe dans le sens de l'émission,
- un module C110 d'émission, apte à émettre un signal de sonde Probe; ce module pouvant être avantageusement mis en oeuvre par une diode laser modulable,
- un module C120 de séparation, apte à séparer une partie d'un signal selon une polarisation particulière dans un sens, et à laisser inchangée la polarisation du signal dans l'autre sens; ce module pouvant être avantageusement mis en oeuvre par un composant appelé CCSP (Cube Combineur Séparateur de Polarisation),
- un module C130 de mesure, apte à mesurer la puissance Mprobe d'un signal optique; ce module pouvant être avantageusement mis en oeuvre par une photodiode.

Les modules C110, C120 et C130 peuvent être regroupés dans un seul module C140 dont la fonction est de fournir une mesure Mprobe de supervision d'une ligne optique mono-fibre.

Avantageusement, le dispositif C10 de traitement peut aussi comprendre un module GenD de génération, apte à générer au moins un signal utile descendant, et un module ProcU de traitement, apte à traiter au moins un signal utile montant.

Le dispositif C10 de traitement peut être mis en oeuvre dans un terminal central selon l'invention, apte à superviser une ligne optique mono-fibre à l'aide du signal de sonde, tel que le terminal CT présenté en relation avec la figure 2.

La **figure 5** présente le dispositif de réémission d'un signal de sonde selon un mode particulier de réalisation de l'invention, mettant en oeuvre le procédé de réémission selon l'invention.

Le dispositif R10 de réémission comprend les modules suivants:
- un module R100 de réception, apte à recevoir un signal de sonde; ce module pouvant être avantageusement mis en oeuvre par un multiplexeur / démultiplexeur également apte à démultiplexer en réception plusieurs signaux de longueurs d'onde différentes correspondant par exemple à des signaux utiles, et à multiplexer en émission autant de signaux de ces mêmes longueurs d'onde; le module R100 est également apte à laisser passer le signal de sonde Probe dans le sens de l'émission,
- un module R110 de réémission, apte à réémettre un signal de sonde; ce module R110 pouvant être avantageusement mis en oeuvre par un miroir optique,
- un module R120 de modification de polarisation, apte à changer une polarisation de signal optique P1 en une polarisation P2; ce module R120 pouvant être avantageusement mis en oeuvre par un rotateur de polarisation.

Les modules R110 et R120 peuvent être regroupés dans un seul module R130 dont la fonction est de réémettre un signal de sonde en vue d'une supervision d'une ligne optique mono-fibre. Avantageusement, un tel module R130 peut être par exemple mis en oeuvre par un miroir rotateur de Faraday effectuant de préférence une rotation de 90 degrés de la polarisation incidente, c'est-à-dire, en d'autres termes, donnant en sortie une polarisation P2 orthogonale à la polarisation P1 entrante. Il est en effet plus facile de discriminer entre deux polarisations orthogonales entre elles.

Avantageusement, le dispositif R10 de réémission peut aussi comprendre un module GenU de génération, apte à générer au moins un signal utile montant, et un module ProcD de traitement, apte à traiter au moins un signal utile descendant.

Le dispositif R10 de réémission peut être mis en oeuvre dans un terminal distant selon l'invention, apte à réémettre sur une ligne optique mono-fibre le signal de sonde, vers un terminal central apte à superviser ladite ligne, tel que le terminal RT présenté en relation avec la figure 2.

La **figure 6** présente un exemple de mise en oeuvre d'un système de supervision de ligne optique mono-fibre selon un mode alternatif de réalisation de l'invention.

Dans ce mode alternatif de réalisation de l'invention, plusieurs lignes optiques mono-fibre sont supervisées, grâce à l'invention, par un même terminal central CTO. Le terminal central CTO comprend les dispositifs de traitement selon l'invention C10a, C10b et C10c. Le terminal distant RT1 comprend le dispositif de réémission selon l'invention R10a. Le terminal distant RT2 comprend le dispositif de réémission selon l'invention R10b. Le terminal distant RT3 comprend le dispositif de réémission selon l'invention R10c. Ainsi, le système SS selon l'invention permet la supervision des lignes optiques mono-fibre MFOLa, MFOLb, et MFOLc par un seul et même équipement CTO sur le même site, ce qui permet des économies matérielles et énergétiques.

## Revendications

1. **Procédé** de réémission d'un signal de sonde, mis en oeuvre par un terminal distant (RT) connecté à un terminal central (CT) par une ligne optique mono-fibre (MFOL), le signal de sonde étant reçu par le terminal distant et de longueur d'onde (λprobe) prédéterminée, les terminaux central et distant s'échangeant sur ladite ligne optique des signaux de données utiles de longueurs d'onde (λd, Au) différentes de celle du signal de sonde, comprenant les étapes suivantes :
• (F1) réception du signal de sonde,
• (F3) réémission du signal de sonde sur la ligne mono-fibre vers le terminal central,
le procédé étant **caractérisé en ce que**, le signal de sonde reçu étant polarisé selon une première polarisation (P1), ledit procédé comprend, préalablement à l'étape de réémission, une étape de :
• (F2) modification de la première polarisation du signal de sonde en une deuxième polarisation (P2).

2. **Procédé** de réémission selon la revendication 1, **caractérisé en ce qu'**il comprend une étape de réflexion du signal de sonde.

3. **Procédé** de réémission selon l'une des revendications 1 ou 2, **caractérisé en ce que** les étapes de modification et de réémission sont mises en oeuvre dans un miroir rotateur de Faraday (PolTrans).

4. **Procédé** de réémission selon l'une quelconque des revendications 1 à 3, **caractérisé en ce que** la deuxième polarisation (P2) est tournée de 90 degrés par rapport à la première polarisation (P1).

5. **Procédé** de traitement d'un signal de sonde, mis en oeuvre par un terminal central (CT) connecté à un terminal distant (RT) par une ligne optique mono-fibre (MFOL), le signal de sonde étant de longueur d'onde (λprobe) prédéterminée, dite longueur d'onde sonde, les terminaux central et distant s'échangeant sur ladite ligne optique des signaux de données utiles de longueurs d'onde (λd, Au) différentes de celle du signal de sonde, le procédé comprenant les étapes suivantes :
• (E1) émission du signal de sonde sur la ligne optique mono-fibre vers le terminal distant,
• (E2) réception d'un signal de longueur d'onde sonde,
• (E4) mesure de puissance (Mprobe) effectuée sur la base du signal de longueur d'onde sonde reçu, en vue d'une supervision de la ligne optique mono-fibre,
le procédé étant **caractérisé en ce que**, le signal de sonde émis étant polarisé selon une première polarisation (P1), il comprend en outre une étape de :
• (E3) séparation du signal de longueur d'onde sonde reçu en une première partie selon la première polarisation (P1) et une deuxième partie selon une deuxième polarisation (P2), la mesure de puissance étant effectuée sur la deuxième partie.

6. **Procédé** de traitement selon la revendication 5, **caractérisé en ce que** l'étape de séparation est mise en oeuvre dans un composant de séparation de polarisation (Sep).

7. **Dispositif** (R10) de réémission d'un signal de sonde, mis en oeuvre par un terminal distant (RT) connecté à un terminal central (CT) par une ligne optique mono-fibre (MFOL), le dispositif (R10) étant apte à recevoir par ladite ligne au moins une première longueur d'onde dite client et à émettre vers le terminal central au moins une deuxième longueur d'onde client, les longueurs d'onde client portant des données utiles, le dispositif (R10) comprenant :
• un module (R100) de réception d'un signal (Probe), dit de sonde, de longueur d'onde prédéterminée différente des première et deuxième longueurs d'onde client,
• un module (R110) de réémission du signal de sonde (Probe) sur la ligne mono-fibre (MFOL) vers le terminal central (CT),
**caractérisé en ce que**, le signal de sonde (Probe) reçu étant polarisé selon une première polarisation, ledit dispositif (R10) comprend en outre un module (R120) de modification de la première polarisation du signal de sonde (Probe) en une deuxième polarisation, apte à être mis en oeuvre préalablement à la réémission du signal de sonde (Probe).

8. **Dispositif** (C10) de traitement d'un signal de sonde, mis en oeuvre par un terminal central (CT) connecté à un terminal distant (RT) par une ligne optique mono-fibre (MFOL), le dispositif (C10) étant apte à émettre au moins une première longueur d'onde dite client et à recevoir au moins une deuxième longueur d'onde client, les longueurs d'onde client portant des données utiles, le dispositif (C10) comprenant :
• un module (C110) d'émission vers le terminal distant (RT) d'un signal (Probe), dit signal de sonde, de longueur d'onde prédéterminée différente des première et deuxième longueurs d'onde client, dite longueur d'onde sonde,
• un module (C100) de réception d'un signal (Probe) de longueur d'onde sonde,
• un module (C130) de mesure de puissance effectuée sur la base du signal (Probe) de longueur d'onde sonde reçu, en vue d'une supervision de la ligne optique mono-fibre (MFOL),
**caractérisé en ce que**, le signal de sonde (Probe) émis étant polarisé selon une première polarisation, ledit dispositif (C10) comprend en outre un module (C120) de séparation du signal (Probe) de longueur d'onde sonde reçu en une première partie selon la première polarisation et une deuxième partie selon une deuxième polarisation, la mesure de puissance (Mprobe) étant effectuée sur la deuxième partie.

9. **Terminal** distant (RT), **caractérisé en ce qu'**il comprend un dispositif (R10) de réémission d'un signal de sonde selon la revendication 7.

10. **Terminal** central (CT), **caractérisé en ce qu'**il comprend au moins un dispositif (C10) de traitement d'un signal de sonde selon la revendication 8.

11. **Système** de supervision (SS) de ligne optique mono-fibre, **caractérisé en ce qu'**il comprend un terminal central (CT0) selon la revendication 10, au moins un terminal distant (RT1, RT2, RT3) selon la revendication 9, et au moins une ligne optique mono-fibre (MFOLa, MFOLb, MFOLc) apte à connecter l'au moins un terminal distant au terminal central.

## Patentansprüche

1. Verfahren zur Rücksendung eines Sondensignals, das von einem entfernten Endgerät (RT) durchgeführt wird, welches über eine optische Einfaserleitung (MFOL) mit einem zentralen Endgerät (CT) verbunden ist, wobei das Sondensignal durch das entfernte Endgerät empfangen wird und eine vorbestimmte Wellenlänge (λprobe) aufweist, wobei das zentrale und das entfernte Endgerät über die optische Leitung Nutzdatensignale mit Wellenlängen (λd, λu) austauschen, die von derjenigen des Sondensignals verschieden sind, die folgenden Schritte umfassend:
• (F1) Empfang des Sondensignals,
• (F3) Rücksendung des Sondensignals über die Einfaserleitung an das zentrale Endgerät,
wobei das Verfahren **dadurch gekennzeichnet ist, dass**, wobei das empfangene Sondensignal gemäß einer ersten Polarisation (P1) polarisiert ist, das Verfahren vor dem Schritt der Rücksendung einen Schritt der
• (F2) Änderung der ersten Polarisation des Sondensignals in eine zweite Polarisation (P2)
umfasst.

2. Verfahren zur Rücksendung nach Anspruch 1, **dadurch gekennzeichnet, dass** es einen Schritt der Reflexion des Sondensignals umfasst.

3. Verfahren zur Rücksendung nach einem der Ansprüche 1 oder 2, **dadurch gekennzeichnet, dass** die Schritte der Änderung und der Rücksendung in einem Faraday-Drehspiegel (PolTrans) durchgeführt werden.

4. Verfahren zur Rücksendung nach einem der Ansprüche 1 bis 3, **dadurch gekennzeichnet, dass** die zweite Polarisation (P2) in Bezug auf die erste Polarisation (P1) um 90 Grad gedreht ist.

5. Verfahren zur Verarbeitung eines Sondensignals, das von einem zentralen Endgerät (CT) durchgeführt wird, welches über eine optische Einfaserleitung (MFOL) mit einem entfernten Endgerät (RT) verbunden ist, wobei das Sondensignal eine vorbestimmte Wellenlänge (λprobe) aufweist, Sondenwellenlänge genannt, wobei das zentrale und das entfernte Endgerät über die optische Leitung Nutzdatensignale mit Wellenlängen (λd, λu) austauschen, die von derjenigen des Sondensignals verschieden sind, wobei das Verfahren die folgenden Schritte umfasst:
• (E1) Senden des Sondensignals über die optische Einfaserleitung an das entfernte Endgerät,
• (E2) Empfang eines Signals mit der Sondenwellenlänge,
• (E4) Messung einer Leistung (Mprobe), die auf der Basis des empfangenen Signals mit der Sondenwellenlänge durchgeführt wird, zwecks einer Überwachung der optischen Einfaserleitung,
wobei das Verfahren **dadurch gekennzeichnet ist, dass** es, wobei das gesendete Sondensignal gemäß einer ersten Polarisation (P1) polarisiert ist, außerdem einen Schritt der
• (E3) Trennung des empfangenen Signals mit der Sondenwellenlänge in einen ersten Teil gemäß der ersten Polarisation (P1) und einen zweiten Teil gemäß einer zweiten Polarisation (P2), wobei die Leistungsmessung an dem zweiten Teil durchgeführt wird,
umfasst.

6. Verfahren zur Verarbeitung nach Anspruch 5, **dadurch gekennzeichnet, dass** der Schritt der Trennung in einer Polarisationstrennungskomponente (Sep) durchgeführt wird.

7. Vorrichtung (R10) zur Rücksendung eines Sondensignals, die von einem entfernten Endgerät (RT) eingesetzt wird, welches über eine optische Einfaserleitung (MFOL) mit einem zentralen Endgerät (CT) verbunden ist, wobei die Vorrichtung (R10) geeignet ist, über die Leitung wenigstens eine erste Wellenlänge, Client-Wellenlänge genannt, zu empfangen und an das zentrale Endgerät wenigstens eine zweite Client-Wellenlänge zu senden, wobei die Client-Wellenlängen Nutzdaten transportieren, wobei die Vorrichtung (R10) umfasst:
• ein Modul (R100) zum Empfang eines Signals (Probe), Sondensignal genannt, mit einer vorbestimmten Wellenlänge, die von der ersten und der zweiten Client-Wellenlänge verschieden ist,
• ein Modul (R110) zur Rücksendung des Sondensignals (Probe) über die Einfaserleitung (MFOL) an das zentrale Endgerät (CT),
**dadurch gekennzeichnet, dass**, wobei das empfangene Sondensignal (Probe) gemäß einer ersten Polarisation polarisiert ist, die Vorrichtung (R10) außerdem ein Modul (R120) zur Änderung der ersten Polarisation des Sondensignals (Probe) in eine zweite Polarisation, die vor der Rücksendung des Sondensignals (Probe) durchgeführt werden kann, umfasst.

8. Vorrichtung (C10) zur Verarbeitung eines Sondensignals, die von einem zentralen Endgerät (CT) eingesetzt wird, welches über eine optische Einfaserleitung (MFOL) mit einem entfernten Endgerät (RT) verbunden ist, wobei die Vorrichtung (C10) geeignet ist, wenigstens eine erste Wellenlänge, Client-Wellenlänge genannt, zu senden und wenigstens eine zweite Client-Wellenlänge zu empfangen, wobei die Client-Wellenlängen Nutzdaten transportieren, wobei die Vorrichtung (C10) umfasst:
• ein Modul (C110) zum Senden eines Signals (Probe), Sondensignal genannt, mit einer vorbestimmten Wellenlänge, die von der ersten und der zweiten Client-Wellenlänge verschieden ist, Sondenwellenlänge genannt, an das entfernte Endgerät (RT),
• ein Modul (C100) zum Empfang eines Signals (Probe) mit der Sondenwellenlänge,
• ein Modul (C130) zur Leistungsmessung, die auf der Basis des empfangenen Signals (Probe) mit der Sondenwellenlänge durchgeführt wird, zwecks einer Überwachung der optischen Einfaserleitung (MFOL),
**dadurch gekennzeichnet, dass**, wobei das gesendete Sondensignal (Probe) gemäß einer ersten Polarisation polarisiert ist, die Vorrichtung (C10) außerdem ein Modul (C120) zur Trennung des empfangenen Signals (Probe) mit der Sondenwellenlänge in einen ersten Teil gemäß der ersten Polarisation und einen zweiten Teil gemäß einer zweiten Polarisation umfasst, wobei die Messung der Leistung (Mprobe) an dem zweiten Teil durchgeführt wird.

9. Entferntes Endgerät (RT), **dadurch gekennzeichnet, dass** es eine Vorrichtung (R10) zur Rücksendung eines Sondensignals nach Anspruch 7 umfasst.

10. Zentrales Endgerät (CT), **dadurch gekennzeichnet, dass** es wenigstens eine Vorrichtung (C10) zur Verarbeitung eines Sondensignals nach Anspruch 8 umfasst.

11. System zur Überwachung (SS) einer optischen Einfaserleitung, **dadurch gekennzeichnet, dass** es ein zentrales Endgerät (CT0) nach Anspruch 10, wenigstens ein entferntes Endgerät (RT1, RT2, RT3) nach Anspruch 9 und wenigstens eine optische Einfaserleitung (MFOLa, MFOLb, MFOLc), die geeignet ist, das wenigstens eine entfernte Endgerät mit dem zentralen Endgerät zu verbinden, umfasst.

## Claims

1. Method for re-emitting a probe signal, implemented by a remote terminal (RT) connected to a central terminal (CT) by a mono-fiber optical line (MFOL), the probe signal being received by the remote terminal and of preset wavelength (λprobe), the central and remote terminals exchanging on said optical line payload data signals of wavelengths (λd, λu) different from that of the probe signal, comprising the following steps:
• (F1) receiving the probe signal; and
• (F3) re-emitting the probe signal on the mono-fiber line toward the central terminal;
the method being **characterized in that**, the received probe signal being polarized with a first polarization (P1), said method comprises, prior to the re-emitting step, a step of:
• (F2) modifying the first polarization of the probe signal to a second polarization (P2).

2. Re-emitting method according to Claim 1, **characterized in that** it comprises a step of reflecting the probe signal.

3. Re-emitting method according to either of Claims 1 and 2, **characterized in that** the re-emitting and modifying steps are implemented in a Faraday rotator mirror (PolTrans).

4. Re-emitting method according to any one of Claims 1 to 3, **characterized in that** the second polarization (P2) is rotated 90 degrees relative to the first polarization (P1).

5. Method for processing a probe signal, implemented by a central terminal (CT) connected to a remote terminal (RT) by a mono-fiber optical line (MFOL), the probe signal being of preset wavelength (λprobe), referred to as probe wavelength, the central and remote terminals exchanging on said optical line payload data signals of wavelengths (λd, λu) different from that of the probe signal, the method comprising the following steps:
• (E1) emitting the probe signal on the mono-fiber optical line toward the remote terminal;
• (E2) receiving a signal of probe wavelength; and
• (E4) performing a measurement of power (Mprobe), carried out on the basis of the received signal of probe wavelength with a view to supervising the mono-fiber optical line;
the method being **characterized in that**, the emitted probe signal being polarized with a first polarization (P1), it furthermore comprises a step of:
• (E3) splitting the received signal of probe wavelength into a first portion with the first polarization (P1) and a second portion with a second polarization (P2), the measurement of power being carried out on the second portion.

6. Processing method according to Claim 5, **characterized in that** the splitting step is implemented in a polarization splitting component (Sep).

7. Device (R10) for re-emitting a probe signal, implemented by a remote terminal (RT) connected to a central terminal (CT) by a mono-fiber optical line (MFOL), the device (R10) being able to receive via said line at least one first so-called client wavelength and to emit toward the central terminal at least one second client wavelength, the client wavelengths carrying payload data, the device (R10) comprising:
• a module (R100) for receiving a so-called probe signal (Probe) of preset wavelength different from the first and second client wavelengths; and
• a module (R110) for re-emitting the probe signal (Probe) on the mono-fiber line (MFOL) toward the central terminal (CT);
**characterized in that**, the received probe signal (Probe) being polarized with a first polarization, said device (R10) furthermore comprises a module (R120) for modifying the first polarization of the probe signal (Probe) to a second polarization, able to be implemented prior to the re-emission of the probe signal (Probe).

8. Device (C10) for processing a probe signal, implemented by a central terminal (CT) connected to a remote terminal (RT) by a mono-fiber optical line (MFOL), the device (C10) being able to emit at least one first so-called client wavelength and to receive at least one second client wavelength, the client wavelengths carrying payload data, the device (C10) comprising:
• a module (C110) for emitting toward the remote terminal (RT) a so-called probe signal (Probe) of preset wavelength different from the first and second client wavelengths, referred to as the probe wavelength;
• a module (C100) for receiving a signal (Probe) of probe wavelength; and
• a module (C130) for performing a measurement of power, carried out on the basis of the received signal (Probe) of probe wavelength, with a view to supervising the mono-fiber optical line (MFOL);
**characterized in that**, the emitted probe signal (Probe) being polarized with a first polarization, said device (C10) furthermore comprises a module (C120) for splitting the received signal (Probe) of probe wavelength into a first portion with the first polarization and a second portion with a second polarization, the measurement of power (Mprobe) being carried out on the second portion.

9. Remote terminal (RT), **characterized in that** it comprises a device (R10) for re-emitting a probe signal according to Claim 7.

10. Central terminal (CT), **characterized in that** it comprises at least one device (C10) for processing a probe signal according to Claim 8.

11. Mono-fiber optical line supervising system (SS), **characterized in that** it comprises a central terminal (CT0) according to Claim 10, at least one remote terminal (RT1, RT2, RT3) according to Claim 9, and at least one mono-fiber optical line (MFOLa, MFOLb, MFOLc) able to connect the at least one remote terminal to the central terminal.
